# EUROPEAN PATENT SPECIFICATION

(11) **EP 3 427 892 B1**
(45) Date of publication and mention of the grant of the patent: **22.04.2020**
(21) Application number: 17763039.9
(22) Date of filing: 01.03.2017
(51) Int. Cl.: B23P 6/00, B23B 1/00, B23B 3/26, B23B 5/06, B23B 25/00, B23Q 11/00, B23C 3/05, B24B 15/03, B23Q 9/00, F16L 55/18, F01D 17/14, F16K 27/02, B23Q 9/02

(54) **SEALING SURFACE PROCESSING MACHINE AND METHOD**
MASCHINE UND VERFAHREN ZUR BEARBEITUNG VON DICHTFLÄCHEN
PROCÉDÉ ET MACHINE DE TRAITEMENT DE SURFACE D'ÉTANCHÉITÉ

(30) Priority: 08.03.2016 JP 2016044862
(43) Date of publication of application: 16.01.2019
(73) Proprietor: Mitsubishi Hitachi Power Systems, Ltd., Yokohama-shi, Kanagawa 220-8401 (JP)
(72) Inventor: SUGITANI, Daichi, Yokohama-shi Kanagawa 220-8401 (JP); TERADA, Genta, Yokohama-shi Kanagawa 220-8401 (JP); TANIGUCHI, Shigenori, Yokohama-shi Kanagawa 220-8401 (JP); SUEZAWA, Nobuchika, Yokohama-shi Kanagawa 220-8401 (JP); SASAKI, Daisuke, Yokohama-shi Kanagawa 220-8401 (JP); KANEMITSU, Kiyoshi, Yokohama-shi Kanagawa 220-8401 (JP); IWASAWA, Tatsuya, Yokohama-shi Kanagawa 220-8401 (JP); NAKAO, Tetsuhide, Yokohama-shi Kanagawa 220-8401 (JP); OYAMA, Koji, Yokohama-shi Kanagawa 220-8401 (JP); SAKAMOTO, Naoki, Yokohama-shi Kanagawa 220-8401 (JP); WAKAMATSU, Yu, Yokohama-shi Kanagawa 220-8401 (JP); OHARA, Takayoshi, Yokohama-shi Kanagawa 220-8401 (JP); KAMADA, Masaru, Yokohama-shi Kanagawa 220-8401 (JP)
(74) Representative: Henkel & Partner mbB
(86) International application number: PCT/JP2017/008131
(87) International publication number: WO 2017/154699

(56) References cited:
- EP-A1- 3 162 477
- WO-A1-94/13432
- CN-Y- 201 023 179
- DE-U1-202010 017 439
- JP-A- H04 164 560
- JP-A- H08 215 933
- JP-U- H02 117 802
- JP-U- H02 117 802
- JP-U- S60 153 701
- JP-U- S60 153 701
- JP-U- S63 136 801
- JP-U- S63 136 801
- US-A- 3 758 994
- US-A- 5 030 046
- US-A1- 2012 003 900

## Description

### Technical Field

The present invention relates to a sealing surface processing machine that performs repair processing of a packing sealing surface for sealing and a sealing surface processing method using the sealing surface processing machine in a valve device that is used for supplying a fluid to a turbine.

### Background Art

For example, in a power-generating facility using a steam turbine, the thermal energy of steam generated in a boiler is converted into mechanical work in the steam turbine, and a valve device is provided between the boiler and the steam turbine. The valve device is provided on a flow channel of steam that is fed to the steam turbine from the boiler, and the flow channel is opened and closed by operating a valve body.

The flow channel of steam is provided in a valve main body, and the valve device is sealed by fixing an attachment plate to a valve main body via a packing sheet. The steam flowing from the boiler into the valve device makes a jet flow and collides with an inner wall portion of the flow channel of the valve main body. Hence, a pressure loss occurs, and the jet flow of the steam colliding with the inner wall portion scatters, thereby causing erosion of an attachment surface of the packing sheet formed on the valve main body. In particular, when the attachment surface of the packing sheet is eroded, there is a concern that a flow of the steam flowing to the steam turbine along the attachment surface will be disturbed.

A sealing surface processing machine and a sealing surface processing method according to the preamble of claims 1 and 7 is disclosed in JPS63136801U.

EP 3162477 A1, which is a prior art document in accordance with Art.54(3) EPC, discloses a sealing surface processing machine for processing, by cutting through a tool, an internal sealing or seating surface of a valve main body of a valve device. A pedestal of the machine is directly mounted onto an attachment surface for the seal member of the valve main body.

JP H08-215933 A discloses a processing machine for processing the inside of a screw hole by means of a cutting tool. A pedestal of the processing machine is directly mounted and completely covers a top surface of the component to which a seal member might be mounted.

### Summary of Invention

### Technical Problem

In the valve device described in JP 04-101756 A, when the attachment surface of the packing sheet is eroded, there is the concern that the flow of the steam flowing to the steam turbine will be disturbed. Hence, it is necessary to perform repair processing of the attachment surface of the packing sheet. The repair processing is performed by cutting the attachment surface of the packing sheet and removing an eroded portion. Thus, the valve device is detached from the power-generating facility and is transported to another factory, and then the repair processing is performed by a predetermined processing device in the factory. Therefore, repair work of the valve device is performed for a long time, and thus the power-generating facility needs to be stopped for a long period, in addition to making it difficult to perform the work.

The present invention is made to solve such problems described above, and an object thereof is to provide a sealing surface processing machine and a sealing surface processing method for improving workability of repair work of an attachment surface of a seal member in a valve main body.

### Solution to Problem

In order to achieve the object described above, according to the present invention, there is provided a sealing surface processing machine with the features of claim 1 that performs cutting of an attachment surface of a seal member in a valve main body in a valve device which includes the valve main body which is provided with a flow channel of a fluid, a valve drive unit which opens and closes the flow channel by a valve body that is inserted into the flow channel from an opening of the valve main body, and an attachment plate which closes the opening by being fixed to the valve main body via the seal member, the machine including: a pedestal which is attached to the valve main body; a main body which is movably supported on the pedestal; a tool holder which holds a tool for processing the attachment surface; a rotating part which rotates the tool holder relative to the main body around an axis parallel to a movement direction of the valve body; a first moving part which is capable of moving the tool holder relative to the main body along a first direction along which the valve body moves; a second moving part which is capable of moving the tool holder relative to the main body along a second direction intersecting with the movement direction of the valve body; a first adjustment device which adjusts a position of the main body in the first direction relative to the pedestal; and a second adjustment device which adjusts a position of the main body in the second direction relative to the pedestal. The pedestal is disposed by having a predetermined gap from the attachment surface in the valve main body such that the attachment surface on which cutting is to be performed is exposed.

Hence, when the attachment surface of the seal member is eroded in the valve device, the sealing surface processing machine is assembled in the valve main body of the valve device, instead of the valve drive unit. Then, in a state in which the valve device is mounted in a turbine or the like as is, it is possible to perform repair processing of the attachment surface. Therefore, there is no need to detach the valve device from the turbine or the like, to transport the valve device to a repair factory, and to perform work of re-assembly of the turbine or the like, and thus it is possible to improve the workability of the repair work of the attachment surface of the seal member in the valve main body. In addition, during the repair processing of the attachment surface by the sealing surface processing machine, the first adjustment device can adjust the position along the first direction, the second adjustment device can adjust the position in the second direction, the position and a tilt of the sealing surface processing machine can be adjusted depending on the attachment surface, and thus it is possible to improve processing accuracy of the repair work of the attachment surface of the seal member in the valve main body.

Preferred embodiments of the machine are provided by the dependent claims 2 to 6.

In the sealing surface processing machine according to the present invention, the rotating part is preferably supported to be movable in the first direction relative to the main body by the first moving part, the tool holder is supported to be movable in the second direction relative to the rotating part by the second moving part, and the tool supported by the tool holder is capable of cutting an inner circumferential side of the attachment surface.

Hence, it is possible to improve the workability of the repair work on the inner circumferential side of the attachment surface of the seal member in the valve main body and it is possible to improve the processing accuracy of the repair work.

In the sealing surface processing machine according to the present invention, the rotating part is preferably supported to be rotatable relative to the main body, the tool holder is supported to be movable in the first direction relative to the rotating part by the first moving part and is supported to be movable in the second direction by the second moving part, and the tool supported by the tool holder is capable of cutting an outer circumferential side of the attachment surface.

Hence, it is possible to improve the workability of the repair work on the outer circumferential side of the attachment surface of the seal member in the valve main body and it is possible to improve the processing accuracy of the repair work.

In the sealing surface processing machine according to the present invention, the tool holder is preferably mounted on an outer circumferential portion of the rotating part, and a counterweight is mounted at a position opposite to the tool holder by 180 degrees in a circumferential direction on the outer circumferential portion of the rotating part.

Hence, the tool holder is mounted on one side of the outer circumferential portion of the rotating portion, and the counterweight is mounted on the other side. In this manner, a shift of a position of the center of gravity of the rotating part is corrected and unbalance is prevented from acting on the rotating part such that it is possible to suppress eccentric rotation of the tool holder.

The sealing surface processing machine according to the present invention preferably further includes: a centering jig that is detachably provided on the rotating part and comes into contact with a valve seat in the valve main body so as to regulate a center position of the rotating part.

Hence, the centering jig regulates the center position of the rotating part in the sealing surface processing machine, thereby making it possible for the center of the valve main body to be coincident with the center of the tool holder and making it possible to improve the processing accuracy of the attachment surface.

In the sealing surface processing machine according to the present invention, the pedestal is disposed by having a predetermined gap from the attachment surface in the valve main body.

Hence, the pedestal is disposed by having a predetermined gap from the attachment surface of the valve main body, thereby exposing the attachment surface to the outside, and thus it is possible to easily perform the cutting of the attachment surface by the cutting tool.

In addition, according to the present invention, there is provided a sealing surface processing method with the features of claim 7 of cutting an attachment surface of a seal member in a valve main body in a valve device which includes the valve main body which is provided with a flow channel of a fluid, a valve drive unit which opens and closes the flow channel by a valve body that is inserted into the flow channel from an opening of the valve main body, and an attachment plate which closes the opening by being fixed to the valve main body via the seal member, the method including: a step of detaching the valve drive unit from the valve main body; a step of attaching the sealing surface processing machine to the valve main body; a step of adjusting a position of the main body by the first adjustment device and the second adjustment device; a step of rotating the tool holder around an axis parallel to a movement direction of the valve body; and a step of moving the tool holder along the second direction.

Hence, in a state in which the valve device is mounted in the turbine or the like as is, it is possible to perform the repair processing of the attachment surface. Therefore, there is no need to detach the valve device from the turbine or the like, to transport the valve device to a repair factory, and to perform work of re-assembly of the turbine or the like, and thus it is possible to improve the workability of the repair work of the attachment surface of the seal member in the valve main body. In addition, during the repair processing of the attachment surface by the sealing surface processing machine, the first adjustment device can adjust the position along the second direction, the second adjustment device can adjust the position in the second direction, the position and a tilt of the sealing surface processing machine can be adjusted depending on the attachment surface, and thus it is possible to improve processing accuracy of the repair work of the attachment surface of the seal member in the valve main body.

A preferred embodiment of the method is provided by dependent claim 8.

The sealing surface processing method according to the present invention further preferably includes: a step of cutting an inner circumferential side of the attachment surface by a cutting tool supported by the tool holder; and a step of cutting an outer circumferential side of the attachment surface by the cutting tool supported by the tool holder.

Hence, a process of cutting the inner circumferential side of the attachment surface and a process of cutting the outer circumferential side of the attachment surface are performed by different steps from each other. In this manner, it is possible appropriately perform the cutting of the entire attachment surface, and thus it is possible to improve the processing accuracy of the repair work of the attachment surface of the seal member in the valve main body.

### Advantageous Effects of Invention

In the sealing surface processing machine and method according to the present invention, when the attachment surface of the seal member is eroded in the valve device, the sealing surface processing machine is assembled in the valve main body of the valve device, instead of the valve drive unit, and thereby it is possible to perform the repair processing of the attachment surface in the state in which the valve device is mounted on the turbine or the like as is. Therefore, it is possible to improve the workability of the repair work of the attachment surface of the seal member in the valve main body and it is possible to improve the processing accuracy of the repair work.

### Brief Description of Drawings

Fig. 1 is a plan view illustrating a sealing surface processing machine for an inner circumferential side of a first embodiment.
Fig. 2 is a sectional view illustrating the sealing surface processing machine for the inner circumferential side when viewed along line II-II in Fig. 1.
Fig. 3 is a sectional view illustrating a fixing method of a main body to a pedestal in the sealing surface processing machine for the inner circumferential side when viewed along line III-III in Fig. 1.
Fig. 4 is a sectional view illustrating a pressing device in the sealing surface processing machine for the inner circumferential side when viewed along line IV-IV in Fig. 1.
Fig. 5 is a schematic view illustrating centering work in the sealing surface processing machine for the inner circumferential side.
Fig. 6 is a longitudinal-sectional view illustrating a sealing surface processing machine for an outer circumferential side of the first embodiment.
Fig. 7 is a sectional view illustrating a valve device.
Fig. 8 is a longitudinal-sectional view illustrating a sealing surface processing machine of a second embodiment.

### Description of Embodiments

Hereinafter, preferred embodiments of a sealing surface processing machine and a sealing surface processing method according to the present invention will be described in detail with reference to the accompanying figures. The present invention is not limited to the embodiments and also includes a configuration obtained by combining embodiments in a case where there are provided a plurality of the embodiments.

### [Valve Device]

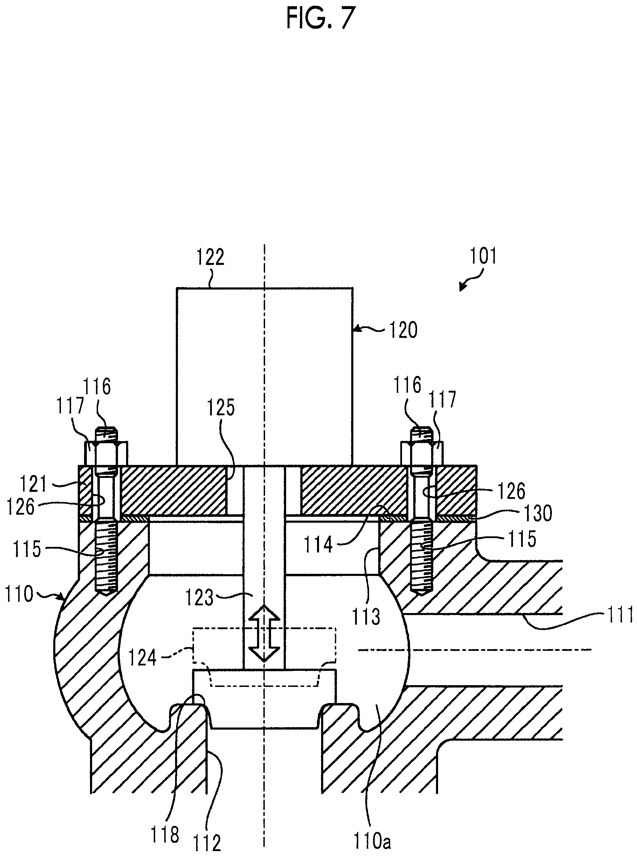

A valve device in which a sealing surface processing machine performs repair processing is described. Fig. 7 is a sectional view illustrating the valve device.

As illustrated in Fig. 7, a valve device 101 includes a valve main body 110 that forms a flow channel 110a of steam and a valve drive unit 120 that is detachably provided in the valve main body 110 and operates a valve body 124 such that the valve body opens and closes the flow channel 110a in the valve main body 110. The valve device 101 is provided between a boiler and a steam turbine in a power-generating facility, which is not illustrated, forms the flow channel 110a for circulating the steam that is supplied from the boiler to the steam turbine by the valve main body 110, and stops circulating of the steam in the flow channel 110a or adjusts a flow rate of the steam circulating through the flow channel 110a by the valve drive unit 120.

The valve main body 110 is provided with a first opening 111 that is opened on one side (right side in Fig. 7) in a horizontal direction, a second opening 112 that is opened on one side (lower side in Fig. 7) in a perpendicular direction, and a third opening 113 that is opened on the other side (upper side in Fig. 7) in the perpendicular direction. In the valve main body 110, the first opening 111 is connected to the boiler, the second opening 112 is connected to the steam turbine, and steam generated in the boiler flows into the valve device 101 (valve main body 110) via the first opening 111 and, then, flows out to the steam turbine via the second opening 112. In other words, in the valve main body 110, the flow channel 110a through which the first opening 111 communicates with the second opening 112 is formed.

The third opening 113 is formed to communicate with the flow channel 110a and to be opposite to the second opening 112. In addition, the third opening 113 is formed to meet an upper surface 114 in the valve main body 110, and the upper surface 114 that meets the third opening 113 is a processed surface processed to be flat. In the valve main body 110, the valve drive unit 120 in the valve device 101 is attached to the upper surface 114.

The valve drive unit 120 includes an attachment plate 121 that is fixed to the valve main body 110 (upper surface 114), a drive unit main body 122 that is provided on the attachment plate 121 and is provided with a drive source (not illustrated), and a valve shaft 123 and the valve body 124 that are operated by the drive unit main body 122 in a direction (perpendicular direction, that is, a vertical direction in Fig. 7).

In the valve main body 110, a plurality of bolt holes 115 is formed in the upper surface 114 in the vicinity of the third opening 113, and studs 116 are screwed into the respective bolt holes 115. On the other hand, the valve drive unit 120 is provided with a valve shaft penetrating hole 125 that the valve shaft 123 can penetrate at a position of the attachment plate 121, which corresponds to the third opening 113 of the valve main body 110, and bolt penetrating holes 126 that the studs 116 can penetrate at positions corresponding to the bolt holes 115 and the studs 116 of the valve main body 110.

The studs 116 penetrate the attachment plate 121 (valve drive unit 120) through the bolt penetrating holes 126 from the upper surface 114 (valve main body 110), and nuts 117 are screwed from tips of the studs 116. In this manner, the attachment plate 121 (valve drive unit 120) is fixed to the upper surface 114 (valve main body 110). The valve main body 110 is provided with the plurality of bolt holes 115 and studs 116 at predetermined intervals in a circumferential direction surrounding the third opening 113, and the valve drive unit 120 is provided with the plurality (the same number of the bolt holes 115 and the studs 116 at the same pitches) of bolt penetrating holes 126 at positions corresponding to the bolt holes 115 and the studs 116, that is, at the predetermined intervals in the circumferential direction surrounding the valve shaft penetrating hole 125.

A packing sheet 130 is provided as a seal member between the valve main body 110 and the attachment plate 121. In the valve main body 110, the upper surface 114 is an attachment surface of the packing sheet 130, the packing sheet 130 is mounted on the upper surface 114, and the attachment plate 121 is mounted on the upper surface of the packing sheet 130. The packing sheet 130 is sandwiched between the upper surface 114 of the valve main body 110 and a lower surface of the attachment plate 121 and is undetachably attached by the studs 116 and the nuts 117.

The drive unit main body 122 is fixed to the attachment plate 121 by a fixing device (not illustrated), the valve shaft 123 is provided to project downward by penetrating the valve shaft penetrating hole 125 of the attachment plate 121 from the drive unit main body 122, and the valve body 124 is attached to the valve shaft 123 on the tip side (a lower end side in Fig. 7).

The valve shaft 123 and the valve body 124 make motion in an axial direction (vertical direction in Fig. 7) of the valve shaft 123 by the drive source of the drive unit main body 122. The valve main body 110 has a valve seat 118 having a shape corresponding to the valve body 124, in the second opening 112, and the operation of the valve drive unit 120 causes the valve body 124 to engage in close contact with the valve seat 118. The valve body 124 engages in close contact with the valve seat 118, thereby closing the flow channel 110a in the valve main body 110 and stopping circulation of the steam from the boiler to the steam turbine (not illustrated).

### [First Embodiment]

The sealing surface processing machine of the first embodiment performs cutting of the attachment surface (upper surface) 114 of the packing sheet 130 in the valve main body 110 in the valve device 101. The sealing surface processing machine is configured of a sealing surface processing machine for an inner circumferential side and a sealing surface processing machine for an outer circumferential side which perform the cutting of the inner circumferential side and the outer circumferential side of the attachment surface (upper surface) 114 of the valve main body 110, respectively.

First, the sealing surface processing machine for the inner circumferential side that performs the cutting of the inner circumferential side of the attachment surface 114 of the packing sheet 130 in the valve main body 110 is described.

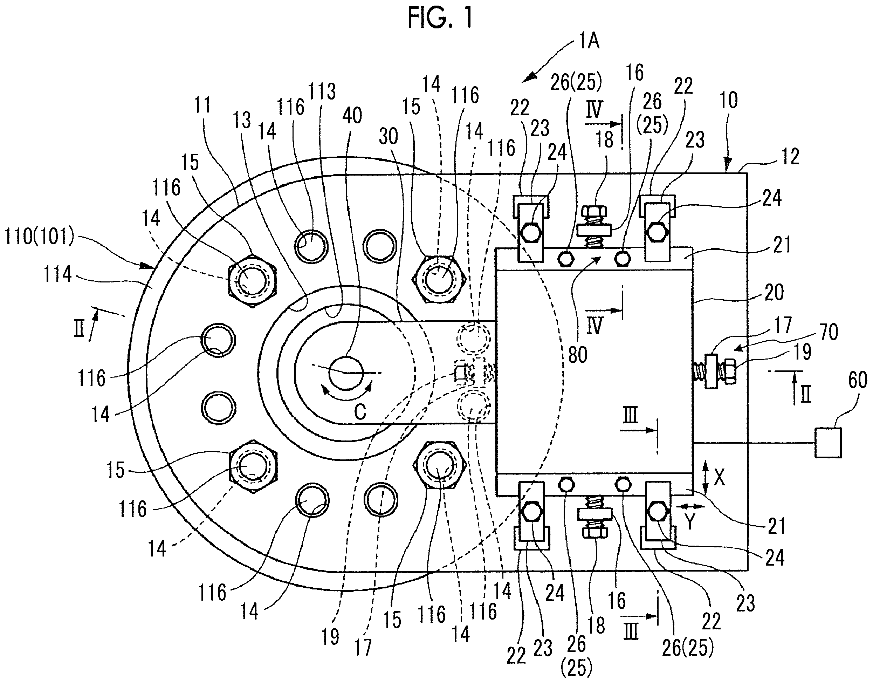

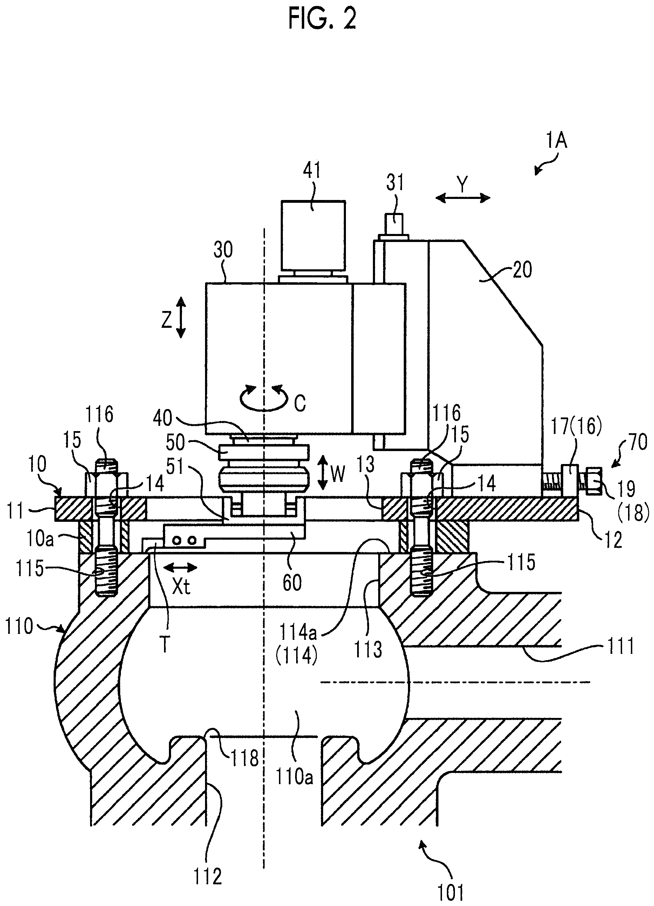

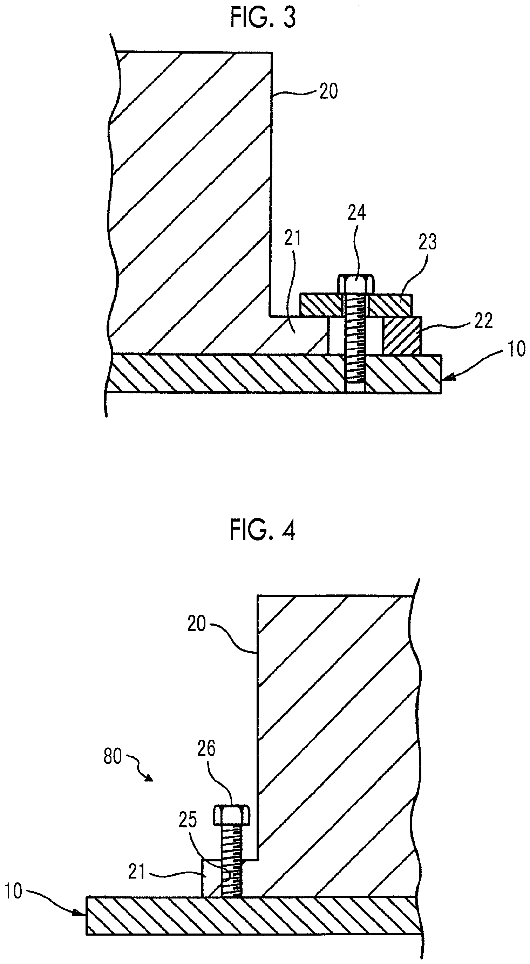

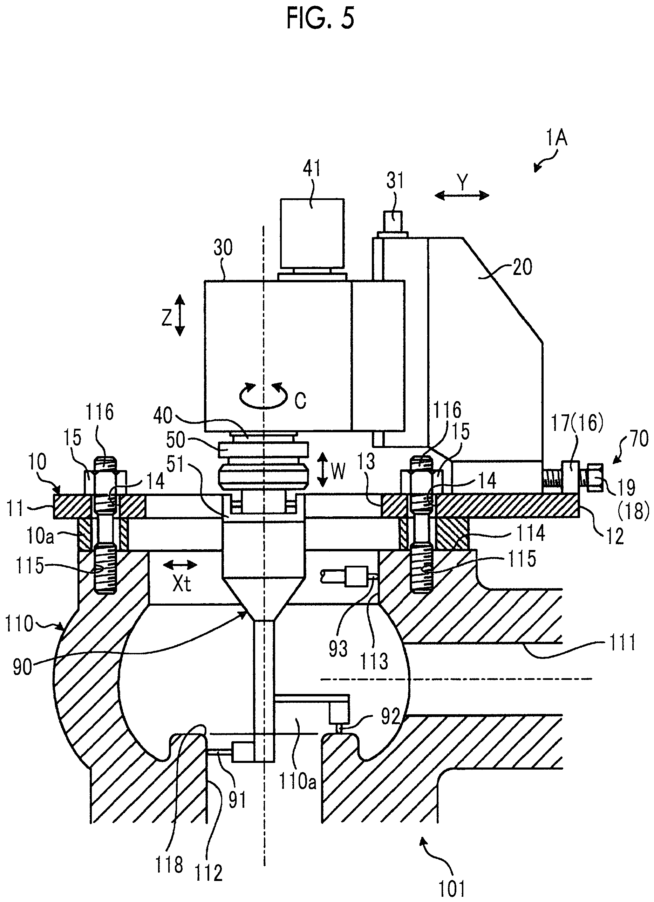

Fig. 1 is a plan view illustrating the sealing surface processing machine for the inner circumferential side of the first embodiment. Fig. 2 is a sectional view illustrating the sealing surface processing machine for the inner circumferential side when viewed along line II-II in Fig. 1. Fig. 3 is a sectional view illustrating a fixing method of a main body to a pedestal in the sealing surface processing machine for the inner circumferential side when viewed along line III-III in Fig. 1. Fig. 4 is a sectional view illustrating a pressing device in the sealing surface processing machine for the inner circumferential side when viewed along line IV-IV in Fig. 1. Fig. 5 is a schematic view illustrating centering work in the sealing surface processing machine for the inner circumferential side.

As illustrated in Figs. 1 and 2, a sealing surface processing machine 1A for the inner circumferential side constituting a sealing surface processing machine 1 includes a pedestal 10, a main body 20, a first supporting part (first moving part) 30, a main shaft (rotating part) 40, a second supporting part (second moving part) 50, and a tool holder 60.

The pedestal 10 is fixed to the valve main body 110 of the valve device 101. The pedestal 10 is mounted on the attachment surface 114 of the valve main body 110 via an attachment portion 10a such that a side of an inner circumferential portion of the attachment surface 114 of the valve main body 110 is exposed. The main body 20 is provided on the pedestal 10 and is movable relative to the pedestal 10 in a horizontal X-axis direction (vertical direction in Fig. 1) and a horizontal Y-axis direction (right-left direction in Fig. 1). The first supporting part 30 horizontally extends from the main body 20 to one side (left side in Figs. 1 and 2) and is movable relative to the main body 20 by a ball screw device 31 in a perpendicular Z-axis direction (vertical direction in Fig. 2). The main shaft 40 is provided on a tip side (tip side in Fig. 2) of the first supporting part 30 and is supported to be movable relative to the first supporting part 30 in a perpendicular W-axis direction (vertical direction in Fig. 2). The main shaft 40 is rotatably driven around a perpendicular C axis by a drive motor 41.

The second supporting part 50 is provided on a tip side (lower end portion in Fig. 2) of the main shaft 40 and causes an attachment base 51 to be movable relative to the main shaft 40 in the horizontal X-axis direction (vertical direction in Fig. 1) and Y-axis direction (right-left direction in Fig. 1). The tool holder 60 is provided under a lower end portion of the attachment base 51, holds a cutting tool T, and is movable by the second supporting part 50 in an Xt-axis direction (right-left direction in Fig. 2) which intersects with the perpendicular direction.

The sealing surface processing machine 1A for the inner circumferential side is an NC device (not illustrated), and movement of the first supporting part 30, the main shaft 40, the second supporting part 50, and the tool holder 60 are all controlled.

The sealing surface processing machine 1A for the inner circumferential side is used for repair processing of the attachment surface 114 when the attachment surface 114 of the packing sheet 130 is eroded in the valve main body 110 in the valve device 101. Therefore, the sealing surface processing machine is assembled in the valve main body 110 of the valve device 101, instead of the valve drive unit 120 (refer to Fig. 7). In other words, the sealing surface processing machine 1A for the inner circumferential side is movable and is capable of performing the repair processing of the valve seat 118 in a state in which the valve device 101 (valve main body 110) is assembled in the boiler and the steam turbine.

In the sealing surface processing machine 1A for the inner circumferential side, the pedestal 10 has a flat plate shape including a circular portion 11 and a rectangular portion 12, the pedestal 10 in the circular portion 11 is fixed to the valve main body 110 of the valve device 101, and the main body 20 of the sealing surface processing machine 1A for the inner circumferential side in the rectangular portion 12 is fixed to the pedestal 10.

The pedestal 10 is provided with a main-shaft through-hole 13 (having approximately the same diameter as that of the third opening 113 and having a diameter larger than that of the third opening 113 in Figs. 1 and 2), which the main shaft 40 can penetrate in the circular portion 11, and a plurality of (12 in Fig. 1) bolt through-holes 14 that the studs 116 can penetrate. The main-shaft through-hole 13 is formed at a position corresponding to the third opening 113, and the plurality (the same number of the bolt holes 115 and the studs 116 at the same pitches) of bolt through-holes 14 are provided at positions corresponding to the bolt holes 115 and studs 116 of the valve device 101, that is, at the predetermined intervals in the circumferential direction surrounding the main-shaft through-hole 13.

The studs 116 of the valve main body 110 of the valve device 101 penetrate the bolt through-holes 14 of the pedestal 10 in the sealing surface processing machine 1A for the inner circumferential side, and nuts 15 are screwed from the tips of the studs 116. In this manner, it is possible to fix the pedestal 10 (sealing surface processing machine 1A for the inner circumferential side) to the valve main body 110 (valve device 101).

Here, the plurality of studs 116 in the valve device 101, and the plurality of bolt through-holes 14 in the sealing surface processing machine 1A for the inner circumferential side (pedestal 10) are provided to be the same number at the same pitches as each other. Therefore, even when the sealing surface processing machine 1A for the inner circumferential side is rotated by one pitch (or a plurality of pitches) relative to the valve device 101, the studs 116 of the valve device 101 can penetrate the bolt through-holes 14 of the pedestal 10. Accordingly, the pedestal 10 (sealing surface processing machine 1A for the inner circumferential side) can be assembled by shifting a phase for each pitch relative to the valve main body 110 (valve device 101). An attachment orientation of the sealing surface processing machine 1A for the inner circumferential side can vary relative to the valve device 101. In this manner, in a case where there is another device (peripheral structure not illustrated) near the valve device 101, it is possible to perform the assembly into the valve device 101 (valve main body 110) of the sealing surface processing machine 1A for the inner circumferential side while avoiding interference with the other device.

As illustrated in Figs. 1 and 3, in the sealing surface processing machine 1A for the inner circumferential side, flanges 21 are provided at symmetrical positions (the upper side and the lower side in Fig. 1) in the main body 20. The flanges 21 are pressed down along with liners 22 formed approximately at the same height (height in the vertical direction in Fig. 3) as that of the flange 21 with push fittings 23 and bolts 24, and thereby the main body 20 is fixed to the pedestal 10.

In addition, the sealing surface processing machine 1A for the inner circumferential side includes a second adjustment device 80 that adjusts a position of the main body 20 relative to the pedestal 10 in the Z-axis direction which is the first direction and a first adjustment device 70 that adjusts the position of the main body 20 relative to the pedestal 10 in the horizontal Y-axis direction and X-axis direction which are the second direction.

In the first adjustment device 70, the pedestal 10 is provided with projecting section 16 and 17 positioned around (four directions in Fig. 1) the main body 20. X-axis direction position adjusting bolts 18 are screwed into the projecting sections 16 positioned on both sides (the upper side and the lower side in Fig. 1) of the main body 20 in the horizontal X-axis direction, and the X-axis direction position adjusting bolts 18 make screw turning. In this manner, it is possible to move the main body 20 on the pedestal 10 in the X-axis direction. Y-axis direction position adjusting bolts 19 are screwed into the projecting sections 17 positioned on both sides (the left side and the right side in Fig. 1) of the main body 20 in the horizontal Y-axis direction, and the Y-axis direction position adjusting bolts 19 make screw turning. In this manner, it is possible to move the main body 20 on the pedestal 10 in the Y-axis direction. In other words, it is possible to adjust the position of the main body 20 relative to the pedestal 10 in a horizontal plane (X-Y plane) by the X-axis direction position adjusting bolts 18 and the Y-axis direction position adjusting bolt 19.

As illustrated in Figs. 1 and 4, in the second adjustment device 80, the main body 20 is provided with a plurality of (four in Fig. 1) screw holes 25 which penetrate the flange 21 in the perpendicular direction (vertical direction in Fig. 4), and push-up bolts 26 are screwed into the respective screw holes 25. The push-up bolts 26 are screwed into the flange 21, and thereby it is possible to lift the main body 20 relative to the pedestal 10, that is, to form a gap between the pedestal 10 and the main body 20. As described above, the main body 20 is lifted such that the gap is formed between the pedestal 10 and the main body 20, and thereby it is possible to insert a height adjusting liner (not illustrated) into the gap (between the pedestal 10 and the main body 20). In other words, the height adjusting liner (not illustrated) is sandwiched on one end side of the main body 20 and only one end side of the main body 20 is raised. In this manner, it is possible to adjust a tilt of the main body 20 (a tilt of the main shaft 40 relative to the perpendicular direction) relative to the pedestal 10.

As described above, the tilt and the positions of the main body 20 in the X-axis direction and the Y-axis direction can be adjusted relative to the pedestal 10 fixed to the valve device 101, and thereby it is possible to perform accurate processing by making the main shaft 40 coincident with the center of the valve seat 118. A use of the liners 22, the push fittings 23, and the bolts 24 for fixing the main body 20 to the pedestal 10 enables the main body 20 to be fixed to the pedestal 10 in a state in which the tilt, the position in the X-axis direction, the position in the Y-axis direction are adjusted.

Further, as illustrated in Fig. 5, in the sealing surface processing machine 1A for the inner circumferential side, a centering jig 90 that comes into contact with the valve seat 118 in the valve main body 110 so as to regulate the center position of the main shaft 40 is detachably provided on the main shaft 40 in the valve device 101. The centering jig 90 is attachable to and detachable from the attachment base 51 of the second supporting part 50 and can mount contacts 91, 92, and 93 at a plurality of positions. Therefore, in a state in which the contacts 91, 92, and 93 come into contact with the valve seat 118 or the third opening 113, the main shaft 40 rotates. In this manner, it is possible to detect a shift of the center position of the main shaft 40 relative to the center position of the valve main body 110 depending on the contact state.

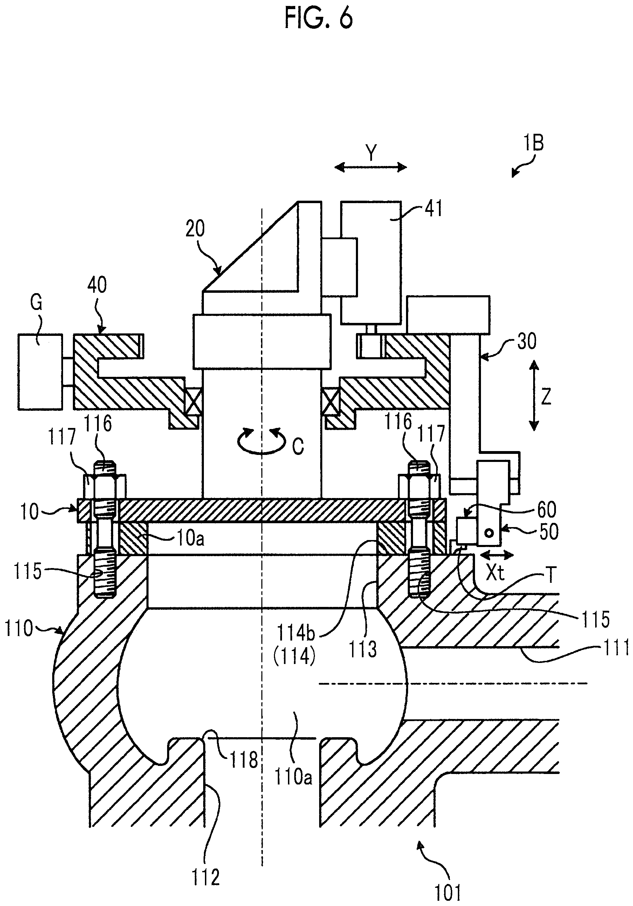

Next, the sealing surface processing machine for the inner circumferential side that performs the cutting the outer circumferential side of the attachment surface 114 of the packing sheet 130 in the valve main body 110 will be described. Fig. 6 is a longitudinal-sectional view illustrating the sealing surface processing machine for the outer circumferential side of the first embodiment. Basically, the sealing surface processing machine for the outer circumferential side has approximately similar configuration as that of the sealing surface processing machine for the inner circumferential side, and the same reference signs are assigned to the members having the same functions. Hence, the description thereof is omitted.

As illustrated in Fig. 6, a sealing surface processing machine 1B for the outer circumferential side constituting the sealing surface processing machine 1 includes the pedestal 10, the main body 20, the first supporting part (first moving part) 30, the main shaft (rotating part) 40, the second supporting part (second moving part) 50, and the tool holder 60.

The pedestal 10 is fixed to the valve main body 110 of the valve device 101. The pedestal 10 has a circular plate shape without holes and is mounted on the attachment surface 114 of the valve main body 110 via the attachment portion 10a such that a side of an outer circumferential portion of the attachment surface 114 of the valve main body 110 is exposed. The main body 20 is provided at the central portion of the pedestal 10 and is movable relative to the pedestal 10 in the horizontal X-axis direction and Y-axis direction. The main shaft 40 is a ring gear that is rotatably supported on an outer circumferential portion of the main body 20 and is rotatably driven around the perpendicular C axis by the drive motor 41 provided on the main body 20. The first supporting part 30 is provided on an outer circumferential portion of the main shaft 40 and, for example, is movable relative to the main shaft 40 in the perpendicular Z-axis direction by a ball screw device or a cylinder device or the like.

The second supporting part 50 is provided on the lower end portion of the first supporting part 30 and is movable relative to the first supporting part 30 in the horizontal X-axis direction and Y-axis direction. The tool holder 60 is provided in the second supporting part 50, holds a cutting tool T, and is movable by the second supporting part 50 in a direction intersecting with the perpendicular direction.

The sealing surface processing machine 1B for the outer circumferential side also includes a first adjustment device that adjusts a position of the main body 20 relative to the pedestal 10 in the horizontal X-axis direction and Y-axis direction which are the first direction, a second adjustment device that adjusts the position of the main body 20 relative to the pedestal 10 in the horizontal Z-axis direction which is the second direction, and a centering jig that comes into contact with the valve seat 118 in the valve main body 110 and regulates the center position of the main shaft 40, which is not illustrated.

In the sealing surface processing machine 1B for the outer circumferential side, the tool holder 60 is mounted to the outer circumferential portion of the main shaft 40 via the first supporting part 30 and the second supporting part 50. In addition, in the sealing surface processing machine 1B for the outer circumferential side, a counterweight G is mounted to the outer circumferential portion of the main shaft 40. The tool holder 60 and the counterweight G are disposed at positions opposite to each other in the circumferential direction of the main shaft 40 by 180 degrees, and weights and mounting positions thereof are set to have the same mass balance.

Here, a sealing surface processing method in the valve device 101 using the sealing surface processing machine 1A for the inner circumferential side and the sealing surface processing machine 1B for the outer circumferential side the valve device 101 as the sealing surface processing machine 1 of the first embodiment is described.

In a case where the attachment surface 114 of the packing sheet 130 is eroded in the valve device 101 due to the drive of the boiler and the steam turbine, the drive of the boiler and the steam turbine is stopped during a regular inspection or the like, and the repair processing of the attachment surface 114 is performed by using the sealing surface processing machine 1.

First, the sealing surface processing machine 1A for the inner circumferential side performs the repair processing of the inner circumferential side of the attachment surface 114 in the valve device 101. The valve drive unit 120 assembled to the valve main body 110 in the valve device 101 is detached as illustrated in Fig. 7, and the sealing surface processing machine 1A for the inner circumferential side is assembled to the valve main body 110 instead of the valve drive unit 120 as illustrated in Fig. 2. In other words, the studs 116 arranged in the valve main body 110 penetrate the bolt through-holes 14 of the pedestal 10, and nuts 15 are screwed with the studs 116. In this manner, the pedestal 10 in the sealing surface processing machine 1A for the inner circumferential side is fixed to the valve main body 110 in the valve device 101.

At this time, in a case where there is another device (peripheral structure or the like not illustrated) around the valve device 101, the sealing surface processing machine 1A for the inner circumferential side is disposed in consideration of the interference with the other device and the workability. The same number of bolt through-holes 14 provided in the pedestal 10 at the same pitches as the number and the pitches of studs 116 is provided, and thereby an attachment orientation of the sealing surface processing machine 1A (pedestal 10) for the inner circumferential side(a direction in which the rectangular portion 12 is positioned) can be set in various directions relative to the valve device 101, and it is possible to dispose the sealing surface processing machine 1A for the inner circumferential side in consideration of the interference with the other device and the workability.

Here, the tilt and the positions (the position in the X-axis direction and the position in the Y-axis direction) of the main body 20 in the horizontal plane are adjusted relative to the pedestal 10. In other words, as illustrated in Figs. 1 to 4, the positions of the main body 20 in the X-axis direction and the Y-axis direction relative to the pedestal 10 are adjusted by the X-axis direction position adjusting bolts 18 and the Y-axis direction position adjusting bolt 19 in the first adjustment device 70. In addition, in the second adjusting device 80, the main body 20 is lifted by the push-up bolt 26 such that the height adjusting liner (not illustrated) is inserted, and thereby the tilt of the main body 20 (a tilt of the main shaft 40 relative to the perpendicular direction) is adjusted relative to the pedestal 10.

At this time, as illustrated in Fig. 5, an attachment position of the sealing surface processing machine 1A for the inner circumferential side relative to the valve device 101 is checked by using the centering jig 90. In other words, the centering jig 90 is mounted under the attachment base 51 of the second supporting part 50, the main shaft 40 rotates, and a shift of the attachment position of the main body 20 relative to the valve main body 110 is detected by the contracts 91, 92, and 93. An amount of adjustment of the tilt and the position of the main body 20 in the X-axis direction and the Y-axis direction is adjusted such that no positional shift occurs, that is, the center position of the valve main body 110 is coincident with the center position of the main shaft 40.

The main body 20 is fixed to the pedestal 10. As illustrated in Fig. 3, the liners 22 are disposed in the vicinity of the flanges 21 in the main body 20, the flange 21 and the liners 22 are pressed down with the push fittings 23 and bolts 24, and thereby the main body 20 is fixed to the pedestal 10.

In the work described above, preparation of the repair processing of the inner circumferential portion of the attachment surface 114 by the sealing surface processing machine 1A for the inner circumferential side is completed. First, the sealing surface processing machine 1A for the inner circumferential side performs the repair processing of the attachment surface 114 in the valve device 101.

As illustrated in Fig. 2, the main shaft 40 is rotatably driven in a state in which the tool holder 60 holds the cutting tool T, the first supporting part 30 is moved in the Z-axis direction (or, the main shaft 40 in the W-axis direction), and the tool holder 60 is moved in the Xt-axis direction. In this manner, the cutting of a range 114a in the attachment surface 114 on the inner circumferential side is performed. At this time, the first supporting part 30 (or, the main shaft 40) and the tool holder 60 move to the extent that it is possible to remove an eroded portion of the attachment surface 114 (114a). In this manner, the repair processing of the range 114a of the attachment surface 114 on the inner circumferential side by the sealing surface processing machine 1A for the inner circumferential side is completed.

Next, the sealing surface processing machine 1A for the inner circumferential side is detached from the valve device 101, the sealing surface processing machine 1B for the outer circumferential side is attached, and the repair processing of the outer circumferential side of the attachment surface 114 in the valve device 101 is performed. In other words, as illustrated in Fig. 6, similar to the description above, the studs 116 arranged in the valve main body 110 penetrate the bolt through-holes 14 of the pedestal 10, and nuts 15 are screwed with the studs 116. In this manner, the pedestal 10 in the sealing surface processing machine 1A for the inner circumferential side is fixed to the valve main body 110 in the valve device 101.

Here, the tilt and the positions (the position in the X-axis direction and the position in the Y-axis direction) of the main body 20 in the horizontal plane are adjusted relative to the pedestal 10 by the first adjustment device 70 and the second adjustment device 80. At this time, the centering jig 90 may be used. The main body 20 is fixed to the pedestal 10.

In the work described above, preparation of the repair processing of the outer circumferential portion of the attachment surface 114 by the sealing surface processing machine 1B for the outer circumferential side is completed. The sealing surface processing machine 1B for the outer circumferential side performs the repair processing of the attachment surface 114 in the valve device 101.

The main shaft 40 is rotatably driven in a state in which the tool holder 60 holds the cutting tool T, the first supporting part 30 is moved in the Z-axis direction (or, the main shaft 40 in the W-axis direction), and the tool holder 60 is moved in the Xt-axis direction. In this manner, the cutting of a range 114b in the attachment surface 114 on the outer circumferential side is performed. At this time, the first supporting part 30 (or, the main shaft 40) and the tool holder 60 move to the extent that it is possible to remove an eroded portion of the attachment surface 114 (114b). In this manner, the repair processing of the range 114b of the attachment surface 114 on the outer circumferential side by the sealing surface processing machine 1B for the outer circumferential side is completed.

As described above, the sealing surface processing machine of the first embodiment includes: the pedestal 10 which is attached to the valve main body 110; the main body 20 which is movably supported on the pedestal 10; the tool holder 60 for holding the cutting tool T for processing the attachment surface 114; the main shaft 40 which rotates the tool holder 60 relative to the main body 20, around the axis parallel to the movement direction of the valve body 124; a first supporting part 30 which is capable of moving the tool holder 60 relative to the main body 20, along the Z-axis direction along which the valve body 124 moves; a second supporting part 50 which is capable of moving the tool holder 60 relative to the main body 20, along the X-axis direction and the Y-axis direction which intersect the movement direction of the valve body 124; a second adjustment device 80 which adjusts the position of the main body 20 in the Z-axis direction relative to the pedestal 10; and a first adjustment device 70 which adjusts the position of the main body 20 in the X-axis direction and the Y-axis direction relative to the pedestal 10.

Hence, when the attachment surface 114 of the packing sheet 130 is eroded in the valve device 101, the sealing surface processing machine 1 is assembled in the valve main body 110 of the valve device 101, instead of the valve drive unit 120. Then, in the state in which the valve device 101 is mounted in the turbine or the like as is, it is possible to perform the repair processing of the attachment surface 114. Therefore, there is no need to detach the valve device 101 from the turbine or the like, to transport the valve device to the repair factory, and to perform work of re-assembly of the turbine or the like, and thus it is possible to improve the workability of the repair work of the attachment surface 114 of the packing sheet 130 in the valve main body 110. In addition, during the repair processing of the attachment surface 114 by the sealing surface processing machine 1, the second adjustment device 80 adjusts the position along the Z-axis direction, the first adjustment device 70 can adjust the position in the X-axis direction and the Y-axis direction, the position and the tilt of the sealing surface processing machine 1 can be adjusted depending on the attachment surface 114, and thus it is possible to improve the processing accuracy of the repair work of the attachment surface 114 of the packing sheet 130 in the valve main body 110.

In the sealing surface processing machine of the first embodiment, the sealing surface processing machine 1A for the inner circumferential side that performs the cutting of the range 114a in the attachment surface 114 on the inner circumferential side in the valve main body 110 and the sealing surface processing machine 1B for the outer circumferential side that performs the cutting of the range 114b in the attachment surface 114 on the outer circumferential side in the valve main body 110 are provided as the sealing surface processing machine 1. Hence, the sealing surface processing machine 1A for the inner circumferential side and the sealing surface processing machine 1B for the outer circumferential side can repair the entire attachment surface 114 of the packing sheet 130.

In the sealing surface processing machine of the first embodiment, the main shaft 40 is supported to be movable in the Z-axis direction relative to the main body 20 by the first supporting part 30, the tool holder 60 is supported to be movable in the X-axis direction and the Y-axis direction relative to the main shaft 40 by the second supporting part 50, and the cutting tool T supported by the tool holder 60 is capable of cutting the inner circumferential side of the attachment surface 114. Hence, it is possible to improve the workability of the repair work of the inner circumferential side of the attachment surface 114 of the packing sheet 130 in the valve main body 110 and it is possible to improve the processing accuracy of the repair work.

In the sealing surface processing machine of the first embodiment, the main shaft 40 is supported to be rotatable relative to the main body 20, the tool holder 60 is supported to be movable in the Z-axis direction relative to the main shaft 40 by the first supporting part 30 and is supported to be movable in the X-axis direction and the Y-axis direction by the second supporting part 50, and the cutting tool T supported by the tool holder 60 is capable of cutting the outer circumferential side of the circular portion 11. Hence, it is possible to improve the workability of the repair work of the outer circumferential side of the attachment surface 114 of the packing sheet 130 in the valve main body 110 and it is possible to improve the processing accuracy of the repair work.

In the sealing surface processing machine of the first embodiment, the tool holder 60 is mounted on the outer circumferential portion of the main shaft 40, and the counterweight G is mounted at the position opposite to the tool holder 60 by 180 degrees in the circumferential direction on the outer circumferential portion of the main shaft 40. Hence, the tool holder 60 is mounted on one side of the outer circumferential portion of the main shaft 40, and the counterweight G is mounted on the other side. In this manner, a shift of the position of the center of gravity of the main shaft 40 is corrected and the unbalance is prevented from acting on the main shaft 40 such that it is possible to suppress the eccentric rotation of the tool holder 60.

In the sealing surface processing machine of the first embodiment, the centering jig 90 that comes into contact with the valve seat 118 in the valve main body 110 so as to regulate the center position of the main shaft 40 is detachably provided on the main shaft 40. Hence, the centering jig 90 regulates the center position of the main shaft 40 in the sealing surface processing machine 1, thereby making it possible for the center of the valve main body 110 to be coincident with the center of the tool holder 60 and making it possible to improve the processing accuracy of the attachment surface 114.

In the sealing surface processing machine according of the first embodiment, the pedestal 10 is disposed by having the predetermined gap from the attachment surface 114 in the valve main body 110. Hence, the attachment surface 114 is exposed to the outside, and thus it is possible to easily perform the cutting of the attachment surface 114 by the cutting tool T.

In addition, the sealing surface processing method of the first embodiment includes a step of detaching the valve drive unit 120 from the valve main body 110; a step of attaching the sealing surface processing machine 1 (1A or 1B) to the valve main body 110; a step of adjusting the position of the main body 20 by the first adjustment device 70 and the second adjustment device 80; a step of rotating the tool holder 60; and a step of moving the tool holder 60 along a radial direction of the valve body 124.

Hence, in a state in which the valve device 101 is mounted in the turbine or the like as is, it is possible to perform the repair processing of the attachment surface 114. Therefore, there is no need to detach the valve device 101 from the turbine or the like, to transport the valve device to the repair factory, and to perform the work of re-assembly of the turbine or the like, and thus it is possible to improve the workability of the repair work of the attachment surface 114 of the packing sheet 130 in the valve main body 110. In addition, during the repair processing of the attachment surface 114 by the sealing surface processing machine 1, the first adjustment device 70 adjusts the position along the Z-axis direction, the second adjustment device 80 can adjust the position in the X-axis direction and the Y-axis direction, the position and the tilt of the sealing surface processing machine 1 can be adjusted depending on the attachment surface 114, and thus it is possible to improve the processing accuracy of the repair work of the attachment surface 114 of the packing sheet 130 in the valve main body 110.

The sealing surface processing method of the first embodiment further includes: a step of cutting the inner circumferential side of the attachment surface 114 by the cutting tool T supported by the tool holder 60; and a step of cutting the outer circumferential side of the attachment surface 114 by the cutting tool T supported by the tool holder 60. Hence, it is possible to appropriately perform the cutting of the entire attachment surface 114, and thus it is possible to improve the processing accuracy of the repair work of the attachment surface 114 of the packing sheet 130 in the valve main body 110.

### [Second Embodiment]

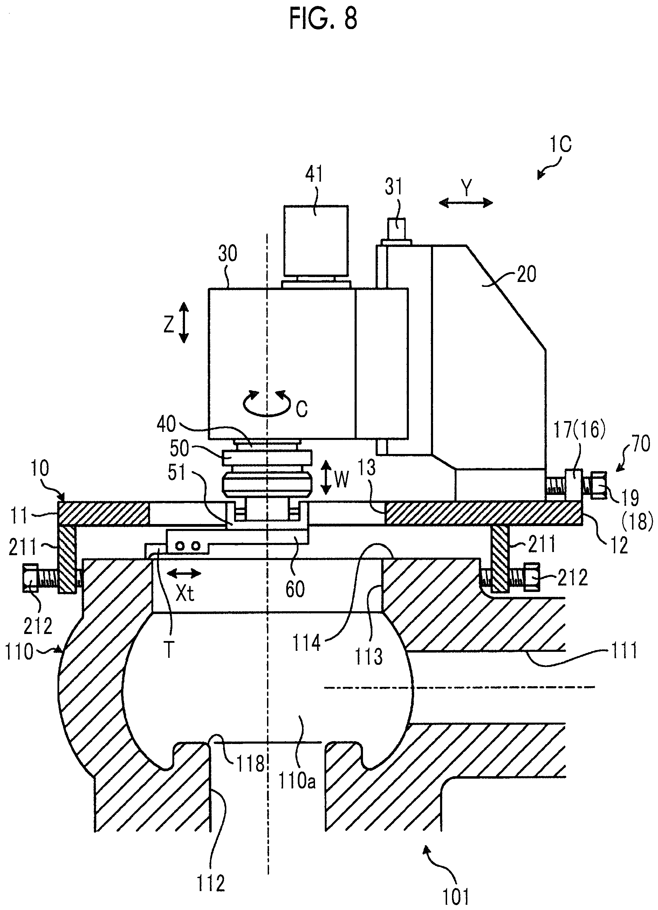

Fig. 8 is a longitudinal-sectional view illustrating a sealing surface processing machine of the second embodiment. The same reference signs are assigned to the members having the same functions as those in the embodiment described above, and thus detailed description thereof is omitted.

In the second embodiment, as illustrated in Fig. 8, a sealing surface processing machine 1C for the inner circumferential side constituting the sealing surface processing machine 1 includes the pedestal 10, the main body 20, the first supporting part (first moving part) 30, the main shaft (rotating part) 40, the second supporting part (second moving part) 50, and the tool holder 60.

The pedestal 10 is fixed to the valve main body 110 of the valve device 101. The pedestal 10 is disposed by having a predetermined gap from the attachment surface 114 of the valve main body 110 such that the side of the inner circumferential portion of the attachment surface 114 of the valve main body 110 is exposed. In other words, support pieces 211 that extend downward from the lower surface on two sides which are opposite to each other are fixed to the pedestal 10. The support pieces 211 are fixed to the lower surface of the pedestal 10 by bolt fastening or the like; however, the support pieces and the pedestal may be integrally formed. The plurality of fixing bolts 212 are screwed to the support pieces 211 from the outer side of the pedestal 10 and tips thereof abut the outer surface of the valve main body 110 along the perpendicular direction. Therefore, the pedestal 10 is positioned and fixed to the valve main body 110 by the plurality of fixing bolts 212 and, thereby, is disposed by having the predetermined gap upward from the attachment surface 114.

The main body 20 is provided on the pedestal 10 and is movable relative to the pedestal 10 in the horizontal X-axis direction and Y-axis direction. The first supporting part 30 horizontally extends from the main body 20 to one side and is movable relative to the main body 20 by the ball screw device 31 in a perpendicular Z-axis direction. The main shaft 40 is provided on the tip side of the first supporting part 30 and is supported to be movable relative to the first supporting part 30 in the perpendicular W-axis direction. The main shaft 40 is rotatably driven around the perpendicular C axis by the drive motor 41.

The second supporting part 50 is provided on the tip portion of the main shaft 40 and causes the attachment base 51 to be movable relative to the main shaft 40 in the horizontal X-axis direction and Y-axis direction. The tool holder 60 is provided under the lower end portion of the attachment base 51, holds the cutting tool T, and is movable by the second supporting part 50 in the Xt-axis direction intersecting with the perpendicular direction.

In addition, the sealing surface processing machine 1C for the inner circumferential side includes the first adjustment device 70 that adjusts the position of the main body 20 relative to the pedestal 10 in the horizontal X-axis direction and Y-axis direction which are the first direction and the second adjustment device 80 that adjusts the position of the main body 20 relative to the pedestal 10 in the horizontal Z-axis direction which is the second direction.

The sealing surface processing machine of the second embodiment includes the pedestal 10, the main body 20, the tool holder 60, the main shaft 40, the first supporting part 30, the second supporting part 50, the first adjustment device 70, and the second adjustment device 80.

Hence, it is possible to improve the workability of the repair work of the attachment surface 114 of the packing sheet 130 in the valve main body 110 and it is possible to improve the processing accuracy of the repair work of the attachment surface 114 of the packing sheet 130 in the valve main body 110.

In the sealing surface processing machine of the second embodiment, the pedestal 10 is disposed by having the predetermined gap from the attachment surface 114 in the valve main body 110. Hence, the pedestal 10 does not come into contact with the attachment surface 114, thereby exposing the attachment surface 114 to the outside. In this manner, it is possible to perform the cutting the inner circumferential side and the outer circumferential side of the attachment surface 114 by one sealing surface processing machine 1, and it is possible to easily perform the cutting of the attachment surface 114 in a short time by the cutting tool T.

### Reference Signs List

1: sealing surface processing machine
1A, 1C: sealing surface processing machine for inner circumferential side
1B: sealing surface processing machine for outer circumferential side
10: pedestal
10a: attachment portion
15: nut
16: projecting section
17: projecting section
18: X-axis direction position adjusting bolt
19: Y-axis direction position adjusting bolt
20: main body
21: flange
22: liner
23: push fitting
24: bolt
25: screw hole
26: push-up bolt
30: first supporting part (first moving part)
31: ball screw device
40: main shaft (rotating part)
41: drive motor
50: second supporting part (second moving part)
51: attachment base
60: tool holder
70: first adjustment device
80: second adjustment device
90: centering jig
91, 92, 93: contact
101: valve device
110: valve main body
110a: flow channel
111: first opening
112: second opening
113: third opening
114: upper surface (attachment surface)
115: bolt hole
116: stud
117: nut
118: valve seat
120: valve drive unit
121: attachment plate
122: drive unit main body
123: valve shaft
124: valve body
125: valve shaft penetrating hole
126: bolt penetrating hole
130: packing sheet (seal member)
211: support piece
212: fixing bolt
G: counterweight
T: cutting tool

## Claims

1. A sealing surface processing machine (1;1A;1B;1C) for performing cutting of an attachment surface (114) of a seal member (130) in a valve main body (110) in a valve device (101), which valve device (101) includes
the valve main body (110) which is provided with a flow channel (110a) of a fluid,
a valve drive unit (120) which is configured to open and close the flow channel (110a) by a valve body (124) that is inserted into the flow channel (110a) from an opening (113) of the valve main body (110), and
an attachment plate (121) which closes the opening (113) by being fixed to the valve main body (110) via the seal member (130),
the sealing surface processing machine (1;1A;1B;1C) comprising:
a pedestal (10) which is configured to be attached to the valve main body (110);
a main body (20) which is movably supported on the pedestal (10);
a tool holder (60) which is configured to hold a tool (T) for processing the attachment surface (114);
a rotating part (40) which is configured to rotate the tool holder (60) relative to the main body (20) around an axis (C) parallel to the movement direction of the valve body (124);
a first moving part (30) which is capable of moving the tool holder (60) relative to the main body (20) along a first direction (Z) along which the valve body (124) moves in operation of the valve device (101);
a second moving part (50) which is capable of moving the tool holder (60) relative to the main body (20) along a second direction (X,Y) intersecting with the movement direction of the valve body (Z); the machine being **characterised in that** further comprises:
a second adjustment device (80) which is configured to adjust a position of the main body (20) in the first direction (Z) relative to the pedestal (10); and
a first adjustment device (70) which is configured to adjust a position of the main body (20) in the second direction (X,Y) relative to the pedestal (10),
and **in that** the pedestal (10) is disposed by having a predetermined gap from the attachment surface (114) in the valve main body (110) such that the attachment surface (114) on which cutting is to be performed is exposed.

2. The sealing surface processing machine (1;1A) according to claim 1,
wherein the rotating part (40) is supported to be movable in the first direction (Z) relative to the main body (20) by the first moving part (30), the tool holder (60) is supported to be movable in the second direction (X,Y) relative to the rotating part (40) by the second moving part (50), and the tool (T) is supported by the tool holder (60) so as to be capable of cutting an inner circumferential side of the attachment surface (114).

3. The sealing surface processing machine (1;1B) according to claim 1,
wherein the rotating part (40) is supported to be rotatable relative to the main body (20), the tool holder (60) is supported to be movable in the first direction (Z) relative to the rotating part (40) by the first moving part (30) and is supported to be movable in the second direction (X,Y) by the second moving part (50), and the tool (T) is supported by the tool holder (60) so as to be capable of cutting an outer circumferential side of the attachment surface (114).

4. The sealing surface processing machine (1;1B) according to claim 1, wherein
an attachment portion (10a) is provided between the pedestal (10) and the attachment surface (114) to form the predetermined gap.

5. The sealing surface processing machine (1;1B) according to claim 3,
wherein the tool holder (60) is mounted on an outer circumferential portion of the rotating part (40), and a counterweight (G) is mounted at a position opposite to the tool holder (60) by 180 degrees in a circumferential direction on the outer circumferential portion of the rotating part (40).

6. The sealing surface processing machine (1;1A;1B;1C) according to any one of claims 1 to 5, further comprising:
a centering jig (90) that is detachably provided on the rotating part (40) and is configured to come into contact with a valve seat (118) in the valve main body (110) so as to regulate a center position of the rotating part (40).

7. A sealing surface processing method of cutting an attachment surface (114) of a seal member (130) in a valve main body (110) in a valve device (101), which valve device (101) includes
the valve main body (110) which is provided with a flow channel (110a) of a fluid,
a valve drive unit (120) which is configured to open and close the flow channel (110a) by a valve body (124) that is inserted into the flow channel (110a) from an opening (113) of the valve main body (110), and
an attachment plate (121) which closes the opening (113) by being fixed to the valve main body (110) via the seal member (130),
the method comprising:
a step of detaching the valve drive unit (120), the attachment plate (121), and the seal member (130) from the valve main body (110); and the method being **characterised by**:
a step of attaching the sealing surface processing machine (1;1A;1B;1C) according to any one of claims 1 to 6 to the valve main body (110);
a step of adjusting a position of the main body (20) by the first adjustment device (70) and the second adjustment device (80);
a step of rotating the tool holder (60) around an axis (C) parallel to a movement direction of the valve body (124); and
a step of moving the tool holder (60) along the second direction (X,Y).

8. The sealing surface processing method according to claim 7, further comprising:
a step of cutting an inner circumferential side of the attachment surface (114) by a cutting tool (T) supported by the tool holder (60); and
a step of cutting an outer circumferential side of the attachment surface (114) by the cutting tool (T) supported by the tool holder (60).

## Patentansprüche

1. Eine Dichtungsoberflächen-Bearbeitungsmaschine (1;1A;1B;1C) zum Ausführen einer Schneidbearbeitung einer Befestigungsoberfläche (114) eines Dichtungselements (130) in einem Ventilhauptkörper (110) in einer Ventilvorrichtung (101), wobei die Ventilvorrichtung (101) aufweist
den Ventilhauptkörper (110), der mit einem Strömungskanal (110a) eines Fluids versehen ist,
eine Ventilantriebseinheit (120), die konfiguriert ist, um den Strömungskanal (110a) durch einen Ventilkörper (124), der in den Strömungskanal (110a) von einer Öffnung (113) des Ventilhauptkörpers (110) eingesetzt ist, zu öffnen und zu schließen, und
eine Befestigungsplatte (121), die die Öffnung (113) verschließt, indem sie an den Ventilhauptkörper (110) über das Dichtungselement (130) befestigt wird,
wobei die Dichtungsoberflächen-Bearbeitungsmaschine (1;1A;1B;1C) aufweist:
einen Sockel (10), der konfiguriert ist, um an dem Ventilhauptkörper (110) angebracht zu werden,
einen Hauptkörper (20), der an dem Sockel (10) beweglich getragen ist,
einen Werkzeughalter (60), der konfiguriert ist, um ein Werkzeug (T) zum Bearbeiten der Befestigungsoberfläche (114) zu halten,
ein Rotationsteil (40), das konfiguriert ist, um den Werkzeughalter (60) relativ zu dem Hauptkörper (20) um eine Achse (C) parallel zu der Bewegungsrichtung des Ventilkörpers (124) zu rotieren,
ein erstes Bewegungsteil (30), das den Werkzeughalter (60) relativ zu dem Hauptkörper (20) entlang einer ersten Richtung (Z), entlang der sich der Ventilkörper (124) im Betrieb der Ventilvorrichtung (101) bewegt, bewegen kann,
ein zweites Bewegungsteil (50), das den Werkzeughalter (60) relativ zu dem Hauptkörper (20) entlang einer zweiten Richtung (X,Y), die die Bewegungsrichtung des Ventilkörpers (Z) schneidet, bewegen kann,
wobei die Maschine **dadurch gekennzeichnet ist, dass** sie ferner aufweist:
eine zweite Einstellvorrichtung (80), die konfiguriert ist, um eine Position des Hauptkörpers (20) in der ersten Richtung (Z) relativ zu dem Sockel (10) einzustellen, und
eine erste Einstellvorrichtung (70), die konfiguriert ist, um eine Position des Hauptkörpers (20) in der zweiten Richtung (X,Y) relativ zu dem Sockel (10) einzustellen,
und dadurch, dass der Sockel (10) angeordnet ist, indem er einen vorbestimmten Zwischenraum von der Befestigungsoberfläche (114) in dem Ventilhauptkörper (110) so hat, dass die Befestigungsoberfläche (114), an der die Schneidbearbeitung auszuführen ist, freiliegt.

2. Die Dichtungsoberflächen-Bearbeitungsmaschine (1;1A) gemäß Anspruch 1,
wobei das Rotationsteil (40) getragen ist, um in der ersten Richtung (Z) relativ zu dem Hauptkörper (20) durch das erste Bewegungsteil (30) bewegbar zu sein, wobei der Werkzeughalter (60) getragen ist, um in der zweiten Richtung (X,Y) relativ zu dem Rotationsteil (40) durch das zweite Bewegungsteil (50) bewegbar zu sein, und das Werkzeug (T) durch den Werkzeughalter (60) so getragen ist, dass es eine innere Umfangsseite der Befestigungsoberfläche (114) durch Schneiden bearbeiten kann.

3. Die Dichtungsoberflächen-Bearbeitungsmaschine (1;1B) gemäß Anspruch 1,
wobei das Rotationsteil (40) getragen ist, um relativ zu dem Hauptkörper (20) drehbar zu sein, wobei der Werkzeughalter (60) getragen ist, um in der ersten Richtung (Z) relativ zu dem Rotationsteil (40) durch das erste Bewegungsteil (30) bewegbar zu sein, und es getragen ist, um in der zweiten Richtung (X,Y) durch das zweite Bewegungsteil (50) bewegbar zu sein, und das Werkzeug (T) durch den Werkzeughalter (60) so getragen ist, dass es eine äußere Umfangsseite der Befestigungsoberfläche (114) durch Schneiden bearbeiten kann.

4. Die Dichtungsoberflächen-Bearbeitungsmaschine (1;1B) gemäß Anspruch 1, wobei
ein Befestigungsabschnitt (10a) zwischen dem Sockel (10) und der Befestigungsoberfläche (114) vorgesehen ist, um den vorbestimmten Zwischenraum zu bilden.

5. Die Dichtungsoberflächen-Bearbeitungsmaschine (1;1B) gemäß Anspruch 3,
wobei der Werkzeughalter (60) an einem äußeren Umfangsabschnitt des Rotationsteils (40) angebracht ist, und ein Gegengewicht (G) an einer Position gegenüber dem Werkzeughalter (60) um 180° in einer Umfangsrichtung an dem äußeren Umfangsabschnitt des Rotationsteils (40) angebracht ist.

6. Die Dichtungsoberflächen-Bearbeitungsmaschine (1;1A;1B;1C) gemäß einem der Ansprüche 1 bis 5, ferner mit:
einer Zentriervorrichtung (90), die abnehmbar an dem Rotationsteil (40) vorgesehen ist und die konfiguriert ist, um in Kontakt mit einem Ventilsitz (118) in dem Ventilhauptkörper (110) so zu gelangen, dass eine Mittenposition des Rotationsteils (40) reguliert wird.

7. Ein Dichtungsoberflächen-Bearbeitungsverfahren zum Schneiden einer Befestigungsoberfläche (114) eines Dichtungselements (130) in einem Ventilhauptkörper (110) in einer Ventilvorrichtung (101), welche Ventilvorrichtung (101) aufweist
den Ventilhauptkörper (110), der mit einem Strömungskanal (110a) eines Fluids versehen ist,
eine Ventilantriebseinheit (120), die konfiguriert ist, um den Strömungskanal (110a) durch einen Ventilkörper (124), der in den Strömungskanal (110a) von einer Öffnung (113) des Ventilhauptkörpers (110) eingesetzt ist, zu öffnen und zu schließen, und
eine Befestigungsplatte (121), die die Öffnung (113) verschließt, indem sie an den Ventilhauptkörper (110) über das Dichtungselement (130) befestigt wird,
wobei das Verfahren aufweist:
einen Schritt des Abnehmens der Ventilantriebseinheit (120), der Befestigungsplatte (121) und des Dichtungselements (130) von dem Ventilhauptkörper (110), und wobei das Verfahren **gekennzeichnet ist durch**:
einen Schritt des Anbringens der Dichtungsoberflächen-Bearbeitungsmaschine (1;1A;1B;1C) gemäß einem der Ansprüche 1 bis 6 an dem Ventilhauptkörper (110),
einen Schritt des Einstellens einer Position des Hauptkörpers (20) **durch** die erste Einstellvorrichtung (70) und die zweite Einstellvorrichtung (80),
einen Schritt des Rotierens des Werkzeughalters (60) um eine Achse (C) parallel zu einer Bewegungsrichtung des Ventilkörpers (124), und
einen Schritt des Bewegens des Werkzeughalters (60) entlang der zweiten Richtung (X,Y).

8. Das Dichtungsoberflächen-Bearbeitungsverfahren gemäß Anspruch 7, ferner mit:
einem Schritt des Schneidens einer inneren Umfangsseite der Befestigungsoberfläche (114) durch ein Schneidwerkzeug (T), das durch den Werkzeughalter (60) getragen ist, und
einem Schritt des Schneides einer äußeren Umfangsseite der Befestigungsoberfläche (114) durch das Schneidwerkzeug (T), das durch den Werkzeughalter (60) getragen ist.

## Revendications

1. Machine (1 ; 1A ; 1B ; 1C) de traitement de surface d'étanchéité pour effectuer une coupe d'une surface (114) de rattachement d'un élément (130) d'étanchéité dans un corps (110) principal de vanne d'un dispositif (101) de vanne, lequel dispositif (101) de vanne comprend
le corps (110) principal de vanne, qui est pourvu d'un canal (110a) d'écoulement d'un fluide,
une unité (120) de commande de vanne, qui est configurée pour ouvrir et fermer le canal (110a) d'écoulement par un obturateur (124), qui est inséré dans le canal (110a) d'écoulement par une ouverture (113) du corps (110) principal de vanne, et
une plaque (121) de rattachement, qui ferme l'ouverture (113) en étant fixée au corps (110) principal de vanne par l'intermédiaire de l'élément (130) d'étanchéité,
la machine (1 ; 1A ; 1B ; 1C) de traitement de surface d'étanchéité comprenant :
un socle (10), qui est configuré pour être rattaché au corps (110) principal de vanne ;
un corps (20) principal, qui est supporté en étant mobile sur le socle (10) ;
un porte-outil (60), qui est configuré pour porter un outil (T) de traitement de la surface (114) de rattachement ;
une partie (40) tournante, qui est configurée pour faire tourner le porte-outil (60) par rapport au corps (20) principal autour d'un axe (C) parallèle à la direction de déplacement de l'obturateur (124) ;
une première partie (30) mobile, qui peut déplacer le porte-outil (60) par rapport au corps (20) principal suivant une première direction (Z), le long de laquelle l'obturateur (124) se déplace lorsque le dispositif (101) de vanne est en fonctionnement ;
une deuxième partie (50) mobile, qui peut déplacer le porte-outil (60) par rapport au corps (20) principal suivant une deuxième direction (X, Y) en intersection avec la direction de déplacement du corps (Z) de vanne ; la machine étant **caractérisée en ce qu'**elle comprend, en outre :
un deuxième dispositif (80) d'ajustement, qui est configuré pour ajuster une position du corps (20) principal dans la première direction (Z) par rapport au socle (10) ; et
un premier dispositif (70) d'ajustement, qui est configuré pour ajuster une position du corps (20) principal dans la deuxième direction (X, Y) par rapport au socle (10),
et **en ce que** le socle (10) est disposé en ayant un intervalle déterminé à l'avance à une surface (114) de rattachement dans le corps (110) principal de vanne, de manière à mettre à découvert la surface (114) de rattachement, sur laquelle une coupe doit être effectuée.

2. Machine (1 ; 1A) de traitement de surface d'étanchéité suivant la revendication 1,
dans laquelle la partie (40) tournante est supportée, de manière à être mobile dans la première direction (Z) par rapport au corps (20) principal, par la première partie (30) mobile, le porte-outil (60) étant supporté, pour être mobile dans la deuxième direction (X, Y) par rapport à la partie (40) tournante, par la deuxième partie (50) mobile et l'outil (T) est supporté par le porte-outil (60), de manière à pouvoir couper un côté circonférentiel intérieur de la surface (114) de rattachement.

3. Machine (1 ; 1B) de traitement de surface d'étanchéité suivant la revendication 1,
dans laquelle la partie (40) tournante est supportée de manière à pouvoir tourner par rapport au corps (20) principal, le porte-outil (60) est supporté de manière à pouvoir être déplacé dans la première direction (Z), par rapport à la partie, (40) tournante, par la première partie (30) mobile et est supporté de manière à pouvoir être déplacé dans la deuxième direction (X, Y) par la deuxième partie (50) mobile, et l'outil (T) est supporté par le porte-outil (60), de manière à pouvoir couper un côté circonférentiel extérieur de la surface (114) de rattachement.

4. Machine (1 ; 1B) de traitement de surface d'étanchéité suivant la revendication 1, dans laquelle
une partie (10a) de rattachement est prévue entre le socle (10) et la surface (114) de rattachement pour former l'intervalle déterminé à l'avance.

5. Machine (1 ; 1B) de traitement de surface d'étanchéité suivant la revendication 3,
dans laquelle le porte-outil (60) est monté sur une partie circonférentielle extérieure de la partie (40) tournante, et un contrepoids (G) est monté en une position opposée au porte-outil (60) à 180 degrés dans une direction circonférentielle sur la partie circonférentielle extérieure de la partie (40) tournante.

6. Machine (1 ; 1A ; 1B ; 1C) de traitement de surface d'étanchéité suivant l'une quelconque des revendications 1 à 5, comprenant, en outre :
un gabarit (90) de centrage, qui est prévu de manière détachable sur la partie (40) tournant et qui est configuré pour venir en contact avec un siège (118) de vanne du corps (110) principal de vanne, de manière à régler une position centrale de la partie (40) tournante.

7. Procédé de traitement de surface d'étanchéité, dans lequel on coupe une surface (114) de rattachement d'un élément (130) d'étanchéité dans un corps (110) principal de vanne d'un dispositif (101) de vanne, lequel dispositif (101) de vanne comprend
le corps (110) principal de vanne, qui est pourvu d'un canal (110a) d'écoulement d'un fluide,
une unité (120) de commande de vanne, qui est configurée pour ouvrir et fermer le canal (110a) d'écoulement par un obturateur (124), qui est inséré dans le canal (110a) d'écoulement par une ouverture (113) du corps (110) principal de vanne, et
une plaque (121) de rattachement, qui ferme l'ouverture (113) en étant fixée au corps (110) principal de vanne par l'intermédiaire de l'élément (130) d'étanchéité,
le procédé comprenant :
un stade de détachement de l'unité (120) de commande de vanne de la plaque (121) de rattachement et de l'élément (130) d'étanchéité du corps (110) principal de vanne ; et le procédé étant **caractérisé par**
un stade de rattachement de la machine (1 ; 1A ; 1B ; 1C) de traitement de surface d'étanchéité suivant l'une quelconque des revendications 1 à 6 au corps (110) principal de vanne ;
un stade d'ajustement d'une position du corps (20) principal par le premier dispositif (7) d'ajustement et par le deuxième dispositif (80) d'ajustement ;
un stade de rotation du porte-outil (60) autour d'un axe (C) parallèle à une direction de déplacement de l'obturateur (124) ; et
un stade de déplacement du porte-outil (60) suivant la deuxième direction (X, Y).

8. Procédé de traitement de surface d'étanchéité suivant la revendication 7, comprenant, en outre :
un stade de coupe d'un côté circonférentiel intérieur de la surface (114) de rattachement par un outil (T) de coupe supporté par le porte-outil (60) ; et
un stade de coupe d'un côté circonférentiel extérieur de la surface (114) de rattachement par l'outil (T) de coupe supporté par le porte-outil (60).
